# EUROPÄISCHE PATENTANMELDUNG

(11) **EP 0 987 524 A2**
(43) Veröffentlichungstag der Anmeldung: **22.03.2000**
(21) Anmeldenummer: 99116309.8
(22) Anmeldetag: 19.08.1999
(51) Int. Cl.: G01D 11/24

(54) **Anzeigeinstrument**

(30) Priorität: 15.09.1998 DE 19842251
(71) Anmelder: Mannesmann VDO Aktiengesellschaft, 60388 Frankfurt am Main (DE)
(72) Erfinder: Ghesla, Jürgen, 6971 Hard (AT); Erben, Thomas, 9453 Eichberg (CH)
(74) Vertreter: Klein, Thomas, Dipl.-Ing.

(57) **Zusammenfassung**

Ein Anzeigeinstrument hat ein Gehäuse (1) mit einer Bodenplatte (3), an welcher eine Kabelaufnahme (5) angeformt ist. Im Bereich der Kabelaufnahme (5) ragen in der Bodenplatte (3) eingegossene Kontaktstifte (8) mit Kontaktspitzen (21) aus ihr heraus. Ein Klemmbügel (17) vermag über ein in die Kabelaufnahme (5) eingelegtes Flachkabel (6) derart verschwenkt zu werden, dass die Kontaktspitzen (21) in Einzeldrähte (7) des Flachkabels (6) eindringen und dadurch das Anzeigeinstrument kontaktieren.

## Beschreibung

Die Erfindung betrifft ein Anzeigeinstrument, insbesondere für ein Fahrzeug, mit einem Gehäuse, welches einen Anschluss für ein aus mehreren Einzeldrähten bestehendes Anschlusskabel aufweist.

Solche Anzeigeinstrumente sind beispielsweise in heutigen Kraftfahrzeugen und Wasserfahrzeugen in der Armaturentafel vorgesehen und allgemein bekannt. Sie weisen meist an ihrer Rückseite eine Steckeraufnahme auf, in welche zur Kontaktierung des Anzeigeinstrumentes nach dem Einbau des jeweiligen Anzeigeinstrumentes ein Stecker eines Anschlusskabels eingesteckt wird. In Kraftfahrzeugen und mehr noch in Schiffen besteht die Gefahr, dass über solche in das Gehäuse eines Anzeigeinstrumentes eingebaute Steckeraufnahmen und über die Steckverbindung selbst Feuchtigkeit in das Anzeigeinstrument eindringen kann. Deshalb führt man oftmals aus dem Gehäuse eines solchen Anzeigeinstrumentes einen Kabelschwanz dichtend heraus, welcher erst außerhalb des Anzeigegerätes mit einem Anschlusskabel verbunden wird. Diese Kontaktierungsart birgt ebenfalls die Gefahr in sich, dass im Bereich der Kabeldurchführung Feuchtigkeit in das Anzeigeinstrument eindringen kann, insbesondere dann, wenn die Dichtung der Kabeldurchführung nicht ordnungsgemäß montiert ist oder wenn auf den Kabelschwanz Zugkräfte wirken.

Der Erfindung liegt das Problem zugrunde, ein Anzeigeinstrument der eingangs genannten Art so auszubilden, dass eine möglichst einfache Kontaktierung möglich ist, ohne dass die Gefahr eines Eindringens von Feuchtigkeit in das Anzeigeinstrument entsteht.

Dieses Problem wird erfindungsgemäß dadurch gelöst, dass außenseitig an dem Gehäuse eine Kabelaufnahme für ein Flachkabel als Anschlusskabel angeordnet ist und dass das Gehäuse in ihm eingegossene Kontaktstifte aufweist, welche mit Kontaktspitzen nach außen hin aus dem Gehäuse in die Kabelaufnahme ragen.

Bei einem solchen Anzeigeinstrument kann aufgrund der eingespritzten Kontaktstifte das Gehäuse ohne Verwendung von Dichtungen völlig dicht ausgeführt werden. Auch über das Flachkabel auf das Anzeigeinstrument einwirkende Zugkräfte können nicht zu Undichtigkeiten führen, weil zur Durchführung des Kabels oder der Kontaktstifte keine durch Dichtungen zu verschließende Bohrungen oder Ausnehmungen im Gehäuse erforderlich werden. Besonders gut geeignet ist das erfindungsgemäße Anzeigeinstrument, wenn es sich bei dem Flachkabel um eine Datenbusleitung handelt. In solchen Fällen mussten bisher die jeweiligen Anzeigeinstrumente einen Eingang und einen Ausgang aufweisen. Durch das erfindungsgemäße "Anzapfen" der Einzeldrähte des Kabels mittels der Kontaktspitzen kann eine Datenbusleitung mit dem jeweiligen Anzeigeinstrument verbunden werden, ohne dass die weiterlaufende Datenbusleitung unterbrochen wird. Ein weiterer Vorteil des erfindungsgemäßen Anzeigeinstrumentes liegt darin, dass die Isolation der einzelnen Drähte des Flachkabels für eine Abdichtung zwischen den Kontaktstiften und dem Flachkabel sorgt, so dass durch die Kontaktierung keine Feuchtigkeit in das Flachkabel eindringen kann.

Eine besonders vorteilhafte Ausgestaltung der Erfindung besteht darin, dass das Gehäuse eine dieses rückseitig verschließende Bodenplatte hat und die Kabelaufnahme mit den Kontaktstiften an der Bodenplatte vorgesehen ist. Diese Ausführungsform ist besonders einfach herstellbar, weil die Bodenplatte mit den Kontaktstiften und der Kabelaufnahme als relativ einfaches Spritzgießteil in einer Spritzgießform erzeugt werden kann.

Die Kontaktstifte werden in dem Anzeigeinstrument besonders fest gehalten, ohne dass es hierzu eines größeren Aufwandes bedarf, wenn im Inneren des Gehäuses in etwa parallel zur Bodenplatte eine Leiterplatte angeordnet ist und wenn die Kontaktstifte die Leiterplatte durchdringen. Durch diese Gestaltung werden die Kontaktstifte nahe ihrer beiden Enden einerseits von der Bodenplatte, andererseits von der Leiterplatte fixiert. Sie neigen deshalb nicht dazu, aus der Bodenplatte auszubrechen.

Für die elektrische Verbindung von Kontaktstiften und Leiterplatte ist es z.B. denkbar, eine Klemmverbindung zu nutzen.

Die Kontaktierung zwischen den Kontaktstiften und der Leiterplatte kann aber vorteilhaft auf herkömmliche und einfache Weise mit üblicherweise vorhandenen Vorrichtungen erfolgen, wenn die Kontaktstifte mit der Leiterplatte verlötet sind.

Das Flachkabel kann besonders einfach auf die Kontaktspitzen gedruckt und in der aufgedrückten Position gehalten werden, wenn die Kabelaufnahme einen über das Flachkabel bewegbaren und dieses auf die Kontaktspitzen drückenden Klemmbügel aufweist.

Der Klemmbügel könnte durch eine oder zwei Schraubverbindungen auf dem Flachkabel gehalten werden. Besonders rasch ist die Verbindung des Anzeigeinstrumentes mit dem Flachkabel möglich, wenn die Kabelaufnahme Rastmittel zum Verrasten des Klemmbügels in geschlossener, das Flachkabel klemmender Position aufweist.

Eine besonders sichere und positionsgenaue Fixierung des Klemmbügels auf der Kabelaufnahme läßt sich erreichen, wenn der Klemmbügel eine Positionierbohrung und die Kabelaufnahme einen entsprechenden, beim Schließen des Klemmbügels in die Positionierbohrung greifenden Positionierstift aufweist.

Fehlmontagen durch Verpolen des Anschlußkabels lassen sich ausschließen, wenn der Positionierstift der Kabelaufnahme in eine korrespondierende Ausnehmung des Flachkabels eingreifbar ist. Eine solche Ausführungsform hat zusätzlich den Vorteil, dass beim Auswechseln eines Anzeigeinstrumentes die Kontaktspitzen zwangsläufig genau in die Löcher gelangen, welche die Kontaktspitzen des ursprünglichen Anzeigeinstrumentes im Flachkabel hinterließen. Dadurch verbleiben beim Flachkabel keine unisolierten Bereiche.

Zur weiteren Minimierung der Herstellungskosten des erfindungsgemäßen Anzeigeinstrumentes trägt es bei, wenn der Klemmbügel über ein Filmscharnier schwenkbar mit der Bodenplatte verbundenen ist.

Der Positionierstift kann von Anfang an ohne unerwünscht großes Spiel in die Positionierbohrung greifen, wenn das Filmscharnier an einem quer zur Ebene der Bodenplatte ausgerichteten Träger angeformt ist, welcher seinerseits über ein weiteres Filmscharnier mit der Bodenplatte Verbindung hat, weil dann ein Verschieben des Klemmbügels ohne Bewegung in der Ebene der Bodenplatte möglich wird.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: einen senkrechten Schnitt durch ein Anzeigeinstrument nach der Erfindung,
- Fig. 2: einen Blick auf die Rückseite des Anzeigeinstrumentes,
- Fig. 3: einen gegenüber Fig. 1 im Maßstab vergrößerten Schnitt durch einen Kontaktierungsbereich des Anzeigeinstrumentes ohne montiertes Flachkabel,
- Fig. 4: eine der Fig. 3 entsprechende Darstellung mit montiertem Flachkabel.

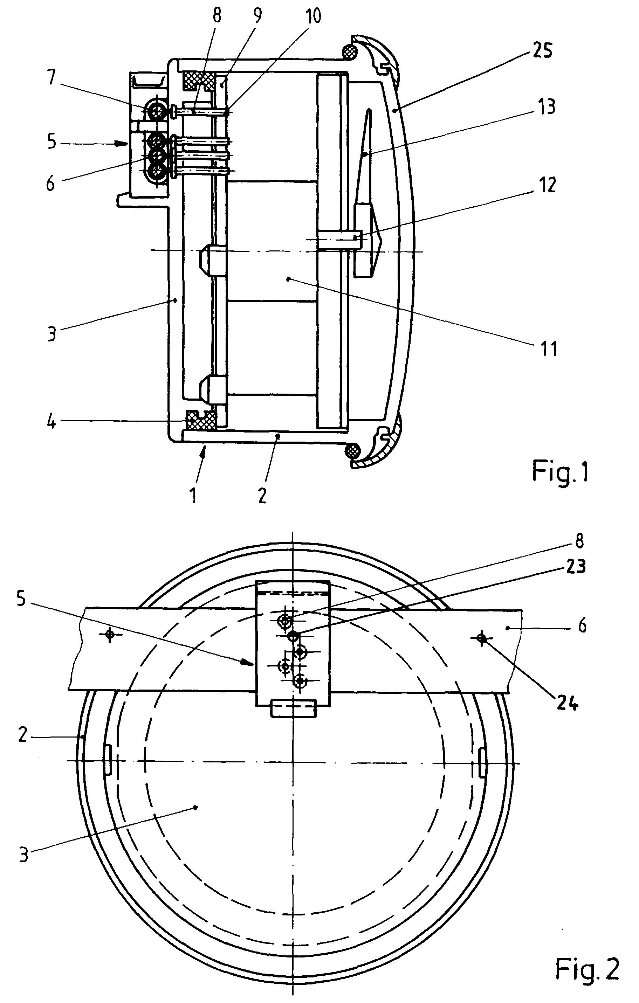

Das in Figur 1 als Ganzes dargestellte Anzeigeinstrument hat ein Gehäuse 1, welches aus einem ein einziges Bauteil bildend mit einer Deckscheibe 25 verbundenen zylindrischen Mantelteil 2 und einer Bodenplatte 3 gebildet ist. Diese Bodenplatte 3 ist durch eine umlaufende Dichtung 4 gegenüber dem Mantelteil 2 abgedichtet. Außenseitig an der Bodenplatte 3 ist eine Kabelaufnahme 5 für ein Flachkabel 6 angeformt, welches mehrere, einzeln isolierte Einzeldrähte 7 hat. Die Kontaktierung dieser Einzeldrähte 7 erfolgt durch Kontaktstifte 8, welche bei der Herstellung der Bodenplatte 3 in diese eingegossen wurden. Die Kontaktstifte 8 durchdringen eine Leiterplatte 9 und haben mit nicht gezeigten Leiterbahnen auf der Leiterplatte 9 durch Lötverbindungen 10 elektrisch Verbindung.

Die Figur 1 zeigt zusätzlich einen Zeigerantrieb 11, welcher eine Zeigerwelle 12 mit einem Zeiger 13 antreibt.

Der Figur 2 ist zu entnehmen, dass es sich bei dem Flachkabel 6 um eine Datenbusleitung handelt, welche an dem Anzeigeinstrument vorbeiführt und die im Bereich der Kabelaufnahme 5 von den Kontaktstiften 8 lediglich "angezapft" wird. Weiterhin sieht man in Figur 2, dass die Kontaktstifte 8 zueinander versetzt sind, so dass sie besonders dicht zueinander angeordnet werden können.

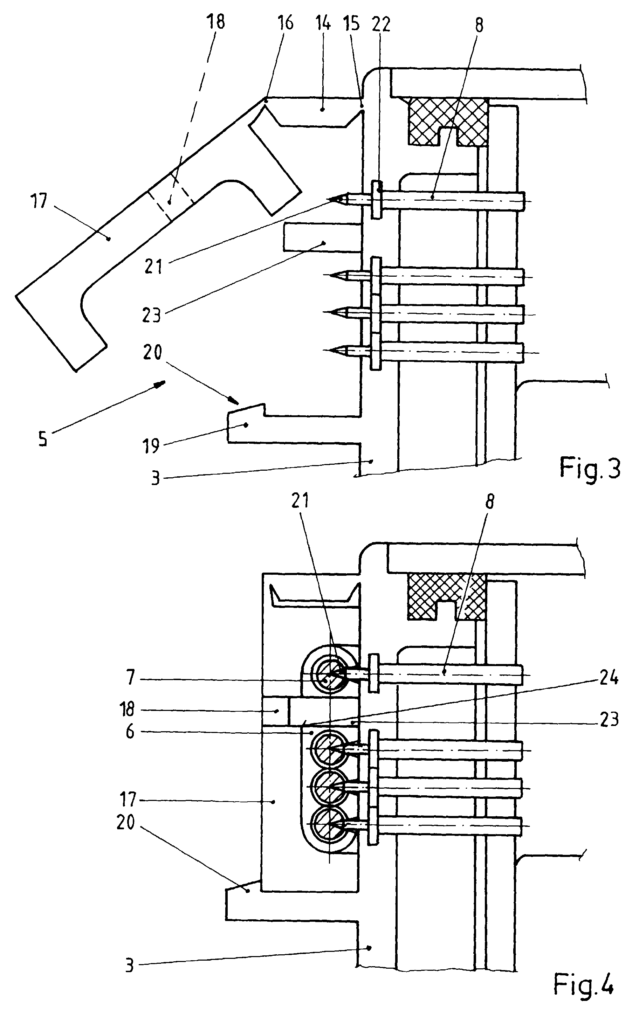

Die Figur 3 verdeutlicht die Gestaltung der Kabelaufnahme 5. Zu sehen ist, dass an der Bodenplatte 3 ein sich rechtwinklig von ihr weg nach außen erstreckender Träger 14 über ein Filmscharnier 15 angeformt ist. An diesem Träger 14 ist über ein Filmscharnier 16 ein Klemmbügel 17 angeschlossen, welcher eine Positionierbohrung 18 aufweist. Die Bodenplatte 3 hat an der dem Träger 14 gegenüberliegenden Seite der Kabelaufnahme 5 einen Steg 19 mit einem als Rastnase ausgebildeten Rastmittel 20.

Die Kontaktstifte 8 weisen jeweils eine Kontaktspitze 21 auf. Innerhalb des Materials der Bodenplatte 3 sorgt jeweils ein Flansch 22 an jedem Kontaktstift 8 dafür, dass dieser relativ hohe Kräfte in Axialrichtung zu übertragen vermag. Im Bereich der Kabelaufnahme 5 ragt ein Positionierstift 23 aus der Bodenplatte 3 nach außen. Dieser Positionierstift 23 greift in die Positionierbohrung 18, wenn man den Klemmbügel 17 schließt.

Die Figur 4 zeigt den Klemmbügel 17 in geschlossenem Zustand, in welchem das als Rastnase ausgebildete Rastmittel 20 über den Klemmbügel 17 greift und ihn dadurch geschlossen hält. Die Kontaktspitzen 21 der Kontaktstifte 8 sind in der gezeigten, kontaktierten Stellung des Anzeigeinstrumentes in den jeweiligen Einzeldraht 7 eingedrungen, ohne ihn jedoch vollständig zu durchdringen, wodurch das Anzeigeinstrument elektrisch verbunden wird, ohne dass hierzu das Flachkabel 6 durchtrennt werden muss. Trennt man das Anzeigeinstrument von dem Flachkabel 6, so ist dasselbe oder ein anderes Anzeigeinstrument später nur in derselben Position mit dem Flachkabel 6 zu verbinden, weil hierzu der Positionierstift 23 ein entsprechendes Loch 24 im Flachkabel 6 durchdringen muss. Die zwangsweise festgelegte Position stellt sicher, dass die Kontaktspitzen 21 zwangsläufig in die ursprünglich von ihnen erzeugten Löcher im Flachkabel 6 eindringen.

Wie Figur 2 zu entnehmen, ist das Flachkabel 6 in festen Abständen mit Ausnehmungen 24 versehen, die zudem außermittig angeordnet sind (s. auch Fig. 4). Auf diese Weise ist sichergestellt, daß das Flachkabel 6 bezüglich der Zuordnung seiner Einzeldrähte 7 zu korrespondierenden Kontaktstiften 8 nur in einer vorgesehenen Einbaulage in der Kabelaufnahme 5 montierbar ist.

## Patentansprüche

1. Anzeigeinstrument, insbesondere für ein Fahrzeug, mit einem Gehäuse, welches einen Anschluss für ein aus mehreren Einzeldrähten bestehendes Anschlusskabel aufweist, **dadurch gekennzeichnet**, dass außenseitig an dem Gehäuse (1) eine Kabelaufnahme (5) für ein Flachkabel (6) als Anschlusskabel angeordnet ist und dass das Gehäuse (1) in ihm eingegossene Kontaktstifte (8) aufweist, welche mit Kontaktspitzen (21) nach außen hin aus dem Gehäuse (1) in die Kabelaufnahme (5) ragen.

2. Anzeigeinstrument nach Anspruch 1, **dadurch gekennzeichnet**, dass das Gehäuse (1) eine dieses rückseitig verschließende Bodenplatte (3) hat und die Kabelaufnahme (5) mit den Kontaktstiften (8) an der Bodenplatte (3) vorgesehen ist.

3. Anzeigeinstrument nach Anspruch 2, **dadurch gekennzeichnet**, dass im Inneren des Gehäuses (1) in etwa parallel zur Bodenplatte (3) eine Leiterplatte (9) angeordnet ist und dass die Kontaktstifte (8) die Leiterplatte (9) durchdringen.

4. Anzeigeinstrument nach Anspruch 3, **dadurch gekennzeichnet**, dass die Kontaktstifte (8) mit der Leiterplatte (9) verlötet sind.

5. Anzeigeinstrument nach einem der vorangehenden Ansprüche, **dadurch gekennzeichnet**, dass die Kabelaufnahme (5) einen über das Flachkabel (6) bewegbaren und dieses auf die Kontaktspitzen (21) drückenden Klemmbügel (17) aufweist.

6. Anzeigeinstrument nach Anspruch 5, **dadurch gekennzeichnet**, dass die Kabelaufnahme (5) Rastmittel zum Verrasten des Klemmbügels (17) in geschlossener, das Flachkabel (6) klemmender Position aufweist.

7. Anzeigeinstrument nach einem der vorangehenden Ansprüche, **dadurch gekennzeichnet**, dass der Klemmbügel (17) eine Positionierbohrung (18) und die Kabelaufnahme (5) einen entsprechenden, beim Schließen des Klemmbügels (17) in die Positionierbohrung (18) greifenden Positionierstift (23) aufweist.

8. Anzeigeinstrument nach einem der vorangehenden Ansprüche, **dadurch gekennzeichnet**, dass der Positionierstift (23) der Kabelaufnahme (5) in eine korrespondierende Ausnehmung (24) des Flachkabels (6) eingreifbar ist.

9. Anzeigeinstrument nach einem der vorangehenden Ansprüche, **dadurch gekennzeichnet**, dass der Klemmbügel (17) über ein Filmscharnier (16) schwenkbar mit der Bodenplatte (3) verbundenen ist.

10. Anzeigeinstrument nach Anspruch 9, **dadurch gekennzeichnet**, dass das Filmscharnier (16) an einem quer zur Ebene der Bodenplatte (3) ausgerichteten Träger (14) angeformt ist, welcher seinerseits über ein weiteres Filmscharnier (15) mit der Bodenplatte (3) Verbindung hat.
